# EUROPÄISCHE PATENTANMELDUNG

(11) **EP 2 093 002 A2**
(43) Veröffentlichungstag der Anmeldung: **26.08.2009**
(21) Anmeldenummer: 09153438.8
(22) Anmeldetag: 23.02.2009
(51) Int. Cl.: B23C 3/12

(54) **Verfahren zum optimierten endkonturnahen Fräsen**

(30) Priorität: 25.02.2008 DE 102008010983
(71) Anmelder: MTU Aero Engines GmbH, 80995 München (DE)
(72) Erfinder: Geisel, Mark, 82131 Gauting (DE)

(57) **Zusammenfassung**

Die Erfindung betrifft ein Verfahren zum optimierten endkonturnahen Fräsen von Werkstücken, insbesondere von Fasen an Turbinenschaufeln, welches dadurch gekennzeichnet ist, dass ein numerisches Optimierungsverfahren zur automatischen Steuerung der kinematischen Bewegungsabläufe vorgesehen ist, wobei eine zusätzliche Rotation um eine zu der Werkzeugachse parallele Achse hinsichtlich kinematischer und/oder kinetischer und/oder werkstückspezifischer Fertigungskriterien optimiert wird. Durch Anwendung des erfindungsgemäßen Verfahrens können optimale Ergebnisse beim konturnahen Fräsen von Fasen beziehungsweise dem Entgraten von Werkstückkanten erzielt werden. Das Verfahren ermöglicht dabei insbesondere die Bereitstellung einer zur Erzielung eines optimalen Bearbeitungsergebnisses notwendigen Bahnoptimierung, wobei diese Optimierung vorzugsweise automatisiert und innerhalb kurzer Zeit erfolgen kann. Weiterhin erzielt das erfindungsgemäße Verfahren eine hohe Serienstabilität in der Fertigung, so dass eine automatisierte Bearbeitung mit optimalen Bearbeitungsergebnissen kostengünstig und reproduzierbar ermöglicht wird.

## Beschreibung

Die Erfindung betrifft ein Verfahren zum optimierten endkonturnahen Fräsen von Werkstücken, insbesondere von Fasen an Turbinenschaufeln.

Im Rahmen der Bearbeitung von Werkstücken werden häufig auch Fasen benötigt, also Abschrägungen der Werkstückkanten, die im Normalfall kleine Abmessungen im Vergleich zu den Gesamtabmessungen des Werkstücks haben. Diese Fasen werden unter einem bestimmten Winkel wie beispielsweise von 45 Grad mittels spanabhebender Verfahren angebracht. Derartige Fasen können entweder für konstruktive Aufgaben eingesetzt werden, beispielsweise dann, wenn sie als Gleitflächen oder Anschläge dienen, oder sie können sicherheitsrelevante Funktionen erfüllen. Insbesondere letztere Anwendung ist praktisch überall dort vorzufinden, wo die Gefahr besteht, dass die betreffenden Bauteilkanten ein Verletzungsrisiko bergen, sei es bei der Montage oder dem späteren Betrieb einer das Bauteil umfassenden Vorrichtung. Scharfe Kanten mit teilweise abstehenden Spänen, so genannte Grate, entstehen dabei insbesondere bei der Bearbeitung metallischer Werkstoffe mittels spanabhebender Verfahren wie z.B. dem Fräsen, und zwar besonders dann, wenn der Winkel zwischen den angrenzenden Flächen kein stumpfer Winkel ist.

Je nach zu erfüllender Funktion wird in diesem Zusammenhang entweder von einer Anfasung (konstruktive Funktion, eher größere und exakt bestimmte Dimensionen mit kleineren relativen Toleranzen) oder einer Entgratung (sicherheitsrelevante Funktion; eher kleine bis kleinste und oftmals weniger exakt bestimmbare Dimensionen mit größeren relativen Toleranzen) gesprochen.

Während bei Einzelteilen oder Werkstücken mit großen Toleranzen zum Entfernen von Graten oder zum Anfasen sowie bei der Nachbearbeitung bereits eingebauter Werkstücke manuelle Verfahren wie z.B. das Feilen zum Einsatz gelangen, wird das Anfasen bzw. Entgraten in der Serienfertigung bevorzugt automatisiert mittels entsprechender Maschinen bewerkstelligt. Für im Wesentlichen gerade Werkstücke können fest montierte Maschinen beispielsweise mit einem Schlitten benutzt werden, auf welchem das zu bearbeitende Werkstück am Fasenfräswerkzeug entlanggeführt und somit entgratet bzw. angefast wird. Bei komplexeren Geometrien, wie sie z.B. im Karosserie- oder Triebwerksbau die Regel sind, kommen so genannte Entgratroboterzellen zum Einsatz. In diesen Fertigungseinrichtungen befindet sich im Wesentlichen ein mehrachsiger Roboter, welcher das Entgratwerkzeug auf einer zuvor programmierten Bahn entlang der entsprechenden Werkstückkante(n) führt. Ggf. können derartige Vorrichtungen noch durch bildgebende und/oder taktil arbeitende Sensoren ergänzt werden, um die exakte Lage des Werkstücks in der Zelle und/oder die aktuelle Größe des zu entfernenden Grats zu bestimmen, damit eine entsprechende situationsabhängige Anpassung der Bearbeitungsparameter erfolgen kann.

Im Falle einer sensorlosen Ausstattung derartiger Entgratroboterzellen muss größtes Augenmerk auf die exakte Positionierung des Werkstücks in der Zelle gelegt werden, da ansonsten die Bahn des Entgratwerkzeugs nicht genau der zur Erzielung eines optimalen Bearbeitungsergebnisses notwendigen Bahn entspricht; diese liegt in genau definiertem Abstand und definierter Lage Bzw. Orientierung zu der jeweiligen Werkstückkante.

Aber auch im Falle sensorunterstützter Entgratroboterzellen ist das Bearbeitungsergebnis häufig suboptimal, da dieses entscheidend von der Bahnplanung abhängt. Im Normalfall ist die Bahnplanung darauf ausgerichtet, dass die Werkzeugachse eines rotierenden bzw. rotationssymmetrischen Werkzeugs stets senkrecht zu der zu bearbeitenden Oberfläche ausgerichtet ist. Die Praxis hat jedoch gezeigt, dass eine derartige Ausrichtung nur in seltenen Fällen und insbesondere nicht bei komplexen, räumlich mehrdimensional verlaufenden Bahnen zu einem optimalen Bearbeitungsergebnis führt.

Eine manuelle Bahnplanung bzw. -optimierung, die durch eine Vielzahl von Versuchen und entsprechenden Versuchsauswertungen gekennzeichnet ist, ist schon daher nicht wünschenswert, als dass derartige Versuche viel Zeit benötigen und hohe Kosten verursachen.

Umgekehrt ist insbesondere in Hochtechnologieanwendungen, wie z.B. im Kraftwerks- oder Triebwerksbau und hier ganz besonders bei der Fertigung entsprechender Turbinenschaufeln ein optimales Bearbeitungsergebnis unverzichtbar, da ansonsten ein ordnungsgemäßer Betrieb der Vorrichtungen überhaupt nicht möglich ist. Da derartige Einrichtungen immer aus einer Vielzahl einzelner, zumindest teilweise identischer Komponenten wie zum Beispiel Turbinen- oder Triebwerksschaufeln bestehen, ist auch die hohe Serienstabilität in der Fertigung derartiger Komponenten ein wichtiges Ziel, welches durch die im heutigen Stand der Technik abgebildeten Bahnplanungsverfahren nur ungenügend erreicht wird.

Die Aufgabe der Erfindung ist demnach die Bereitstellung eines Verfahrens, mit welchem optimale Ergebnisse beim konturnahen Fräsen von Fasen beziehungsweise dem Entgraten von Werkstückkanten erzielt werden können. Das Verfahren ist dabei insbesondere darauf gerichtet, die zur Erzielung eines optimalen Bearbeitungsergebnisses erforderliche Bahnoptimierung bereitzustellen, wobei diese Optimierung vorzugsweise automatisiert und innerhalb kurzer Zeit erfolgen soll.

Die Aufgabe wird durch das in Anspruch 1 vorgeschlagene Verfahren gelöst. Dementsprechend wird der kinematische Bewegungsablauf durch die Berücksichtigung einer zusätzlichen Rotation um eine zu der Werkzeugachse parallelen Achse hinsichtlich kinematischer und/oder kinetischer und/oder werkstückspezifischer Fertigungskriterien optimiert. Durch die Automatisierbarkeit des erfindungsgemäßen Verfahrens kann die gewünschte Optimierung der Bahnplanung schnell und sicher erfolgen. Durch das aus dem erfindungsgemäßen Verfahren resultierende optimierte Bearbeitungsergebnis wird die Serienstabilität beim konturnahen Entgraten signifikant erhöht.

Weitere bevorzugte Ausführungsformen sind den abhängigen Ansprüchen sowie der nachfolgenden detaillierten Beschreibung und den Figuren zu entnehmen.

Grundlage des erfindungsgemäßen Verfahrens bietet die Erkenntnis, dass die Anwendung des robotergestützten Anfasens bzw. Entgratens im Falle der Verwendung roatationssymmetrischer Werkzeuge einen kinematischen Freiheitsgrad besitzt, welcher ausgenutzt werden kann, um die gewünschten optimalen Bearbeitungsergebnisse zu erzielen.

Im Gegensatz zu den im Stand der Technik verwendeten Bahnplanungsverfahren, welche im Normalfall darauf ausgerichtet sind, dass das Vektorprodukt aus Werkzeugachse eines rotierenden Werkzeugs und Flächennormale der Werkstückoberfläche stets in Vorschubrichtung des Werkzeuges weisen soll, werden nach dem erfindungsgemäßen Verfahren andere Zielvorgaben benutzt, die dazu führen können, dass ein besseres Bearbeitungsergebnis erzielt wird, als es bei einer Ausrichtung der einzelnen Vektoren gemäß dem Stand der Technik möglich wäre.

Mit anderen Worten, eine nach dem erfindungsgemäßen Verfahren optimierte Bahnplanung führt im Normalfall dazu, dass das Vektorprodukt aus Werkzeugachse eines rotierenden Werkzeugs und Flächennormale der Werkstückoberfläche gerade nicht jederzeit in Vorschubrichtung weist.

Dementsprechend ist das erfindungsgemäße Verfahren zum optimierten endkonturnahen Fräsen mittels eines rotationssymmetrischen Werkzeugs dadurch gekennzeichnet, dass der kinematische Bewegungsablauf durch die Berücksichtigung einer zusätzlichen Rotation um eine zu der Werkzeugachse parallelen Achse hinsichtlich kinematischer und/oder kinetischer und/oder werkstückspezifischer Fertigungskriterien optimiert wird.

Als rotationssymmetrische Werkzeuge kommen hier insbesondere Fräswerkzeuge in Frage. Durch die erfindungsgemäße zusätzliche Rotation wird das Bearbeitungsergebnis nicht beeinflusst, da aufgrund der Rotationssymmetrie des Werkzeugs ein zusätzlicher Freiheitsgrad für die Programmierung des Bewegungsablaufes entlang einer vorgegebenen Kontur existiert.

Theoretisch ist es möglich, den Fräsprozess manuell, also handgesteuert durch einen Bediener, durchzuführen. Nach einer bevorzugten Ausführungsform des erfindungsgemäßen Verfahrens wird dieser Fräsprozess jedoch robotergestützt durchgeführt. Insbesondere im Hinblick auf die Produktion von Serienbauteilen komplexer Geometrie ist die Verwendung eines automatisierten, zumeist robotergestützten Produktionsmittels praktisch unverzichtbar.

Nach einer weiteren bevorzugten Ausführungsform wird das Fräsen mittels einer CNC-Werkzeugmaschine durchgeführt. Derartige Werkzeugmaschinen bieten zwar im Vergleich zu Werkzeugrobotern zumeist eine geringere Anzahl von Freiheitsgraden, sind jedoch für viele typische Aufgaben ausreichend und werden dann aufgrund ihrer günstigeren Anschaffungs- und Wartungskosten bevorzugt eingesetzt.

Besonders bevorzugte Ausführungsformen des erfindungsgemäßen Verfahrens verwenden als Zielgröße zur Optimierung den Weg des Werkzeugs und/oder dessen Geschwindigkeit und/oder dessen Beschleunigung. Nach weiteren bevorzugten Ausführungsformen können auch alternativ oder zusätzlich aus den zuvor genannten Zielgrößen abgeleitete kinematische Kenngrößen verwendet werden.

So kann eine besonders bevorzugte Zielgröße beispielsweise darin bestehen, dass die Winkelbeschleunigung des Fräswerkzeuges entweder einen bestimmten Wert nicht überschreitet, oder im Durchschnitt und über die gesamte Fräsbahn hinweggesehen minimiert wird, da Versuche möglicherweise ergeben haben, dass beim Überschreiten eines bestimmten Grenzwertes mit Werkzeugvibrationen und somit ungenügenden Bearbeitungsergebnissen gerechnet werden muss, die zudem nicht exakt vorhersagbar und daher besonders kritisch sind.

Eine andere besonders bevorzugte Zielgröße kann erfindungsgemäß beispielsweise darin bestehen, dass die Rotation des Vektorfeldes, welches aus den drei Vektoren bestehend aus der Werkzeugachse, der Flächennormalen der Werkstücksoberfläche, sowie dem jeweiligen Vektor-Kreuzprodukt gebildet wird, gleich dem Nullvektor 0 sein soll.

Die Erreichung des Ziels einer optimalen Bahnplanung wird erfindungsgemäß besonders bevorzugt dadurch erreicht, dass die Optimierung des kinematischen Bewegungsablaufes mittels numerischer Verfahren durchgeführt wird. Alternativ kann es jedoch auch vorgesehen sein, dass in bestimmten Fällen nicht nur eine numerische, sondern auch eine analytische Lösung für das jeweilige Problem existiert, welche dann ebenfalls bzw. alternativ genutzt werden kann. In den häufigsten Fällen wird es jedoch nicht oder nur mit unverhältnismäßig hohem Aufwand möglich sein, eine analytische Lösung zu finden, weshalb die Lösungsfindung mithilfe von numerischen Verfahren bevorzugt wird. Im Normalfall zählt die Optimierung des Bewegungsablaufes bzw. die entsprechende Bahnplanung aufgrund des zusätzlichen Freiheitsgrades zu der nichttrivialen Klasse der np-vollständigen Probleme bzw. der multidimensionalen nichtlinearen Optimierungsprobleme, weshalb eine analytische Lösung des Optimierungsproblems nur in seltenen Fällen existiert bzw. gefunden und angegeben werden kann.Erfindungsgemäß kommen bevorzugt insbesondere die folgenden numerischen Optimierungsverfahren zum Einsatz:
- Das numerische Verfahren kann eine rekursive Min-Max-Spielstrategie sein.
- Das numerische Verfahren kann eine Variante der Methode des steilsten Gradienten sein.
- Als das numerische Verfahren kann das Verfahren des "simulated-annealing" eingesetzt werden.
- Als numerisches Verfahren kann ein genetischer Algorithmus eingesetzt werden.
- Als numerisches Verfahren kann die Evolutionsstrategie eingesetzt werden.
- Als numerisches Verfahren kann eine Variante des "operation research" eingesetzt werden; besonders bevorzugt können dabei linear überbestimmte Gleichungssysteme zur Minimierung des Gausschen Fehlerquadrates eingesetzt werden.
- Als numerisches Verfahren kann ein Monte-Carlo-Verfahren eingesetzt werden.

Es ist klar, dass die obige Aufzählung der numerischen Verfahren nicht als abschließend aufzufassen ist, sondern vielmehr eine subjektiv als optimal empfundene Auswahl darstellt, welche sich in Zukunft jederzeit durch andere, beispielsweise neu entwickelte numerische Verfahren erweitern lässt und auch sämtliche Kombinationen der genannten Verfahren miteinander oder mit anderen, zweckdienlichen Optimierungsverfahren umfasst.

Das erfindungsgemäße Verfahren kann generell zur Erzeugung einer optimierten Bahn zur Führung eines rotationssymmetrischen Werkzeugs eingesetzt werden, wobei diese Bahn beispielsweise auch zum Glätten einer Oberfläche dienen kann. Nach einer bevorzugten Ausführungsformen dient das erfindungsgemäße Verfahren jedoch insbesondere der Optimierung von Bahnen oder Bewegungsabläufen zur Herstellung von Fasen beziehungsweise zum Entgraten von Werkstückkanten.

Nach einer besonders bevorzugten Ausführungsform dient das Verfahren insbesondere der Herstellung von Fasen, welche sich an Turbinenschaufeln befinden, und/oder der Entgratung derselben.

Nachfolgend wird die Erfindung beispielhaft zusammen mit den beigefügten Zeichnungen beschrieben:
- Fig. 1: zeigt die Lage eines rotationssymmetrischen Werkzeugs 1 in Relation zu einem Werkstück 2 sowie die diese Lage definierenden Vektoren 3, 4 und 6.
- Fig. 2A: zeigt einen Schnitt durch ein Werkstück 1, die zu bearbeitende Werkstückkontur 7, sowie die Lage eines Werkzeugkoordinatensystems an verschiedenen Stellen der Werkstückkontur 7 bei einer Bahnplanung gemäß dem Stand der Technik.
- Fig. 2B: zeigt einen Schnitt durch ein Werkstück 1, die zu bearbeitende Werkstückkontur 7, sowie die Lage eines Werkzeugkoordinatensystems an verschiedenen Stellen der Werkstückkontur 7 bei einer Bahnplanung gemäß dem erfindungsgemäßen Verfahren.
- Fig. 3A: zeigt einen Schnitt durch ein quadratisches Werkstück 1, die zu bearbeitende Werkstückkontur 7, sowie die Lage des Vektors 4 an verschiedenen Stellen der Werkstückkontur 7 bei einer Bahnplanung gemäß dem Stand der Technik.

- Fig. 3BA: zeigt einen Schnitt durch ein quadratisches Werkstück 1, die zu bearbeitende Werkstückkontur 7, sowie die Lage des Vektors 4 an verschiedenen Stellen der Werkstückkontur 7 bei einer Bahnplanung gemäß dem erfindungsgemäßen Verfahren.

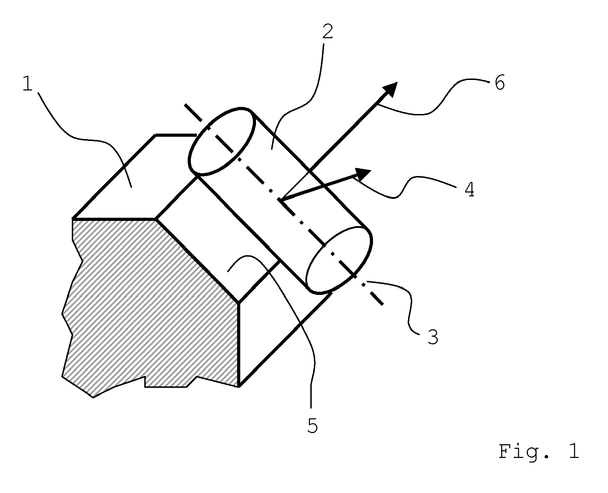

Die **Figur 1** zeigt die Lage eines rotationssymmetrischen Werkzeugs 2 in Relation zu einem Werkstück 1 sowie die diese Lage definierenden Vektoren 3, 4 und 6. Im dargestellten Beispiel kann das rotationssymmetrische Werkzeug 2 beispielsweise ein Walzenfräser sein. Die Rotationsachse 3 dieses Fräsers definiert einen Vektor n_{W}. Das Werkstück 1 besitzt eine zu bearbeitenden Werkstückkante, die im gezeigten Beispiel als Fase 5 ausgebildet ist, aber auch allgemein als zu bearbeitendes Flächenelement dA bezeichnet werden kann. Senkrecht auf dieser Fase 5 stehend befindet sich ein Vektor 4, der deren Flächennormale n_{F} bzw. die Flächennormale des Flächenelementes dA darstellt. Schließlich zeigt die Figur 1 noch einen weiteren Vektor 6, der das Vektor-Kreuzprodukt aus den Vektoren 3 und 4 darstellt, und gemäß der Formel n_{S}=(n_{W} x n_{F}) gebildet wird. Gemäß der Rechten-Hand-Regel steht dieser Vektor 6 jederzeit senkrecht auf den beiden anderen Vektoren 3 und 4.

Wie unmittelbar aus der Skizze ersichtlich, ist es offenbar möglich, das Werkstück 1 beliebig um die Werkzeugachse 5 zu rotieren, ohne dass das Bearbeitungsergebnis beeinflusst wird. Es existiert auf Grund der Rotationssymmetrie des Werkzeugs 1 daher ein zusätzlicher Freiheitsgrad für die Programmierung des Bewegungsablaufes entlang einer vorgegebenen Kontur.

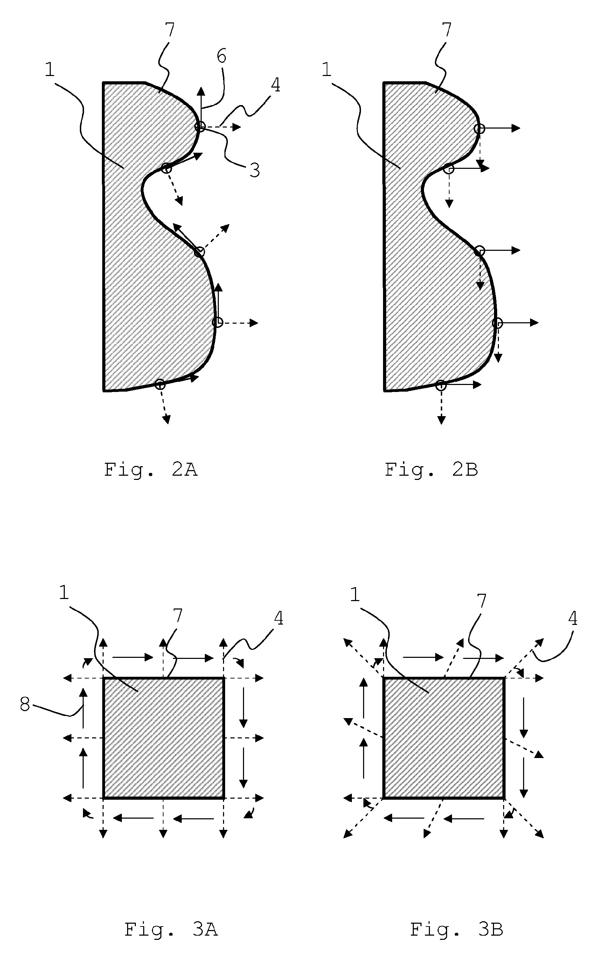

Die **Figur 2A** zeigt einen Schnitt durch ein Werkstück 1, die zu bearbeitende Werkstückkontur 7, sowie die Lage eines Werkzeugkoordinatensystems an verschiedenen Stellen der Werkstückkontur 7 bei einer Bahnplanung gemäß dem Stand der Technik. Hierbei ist der Vektor 4 bzw. die Flächennormale n_{F} jederzeit senkrecht auf der zu bearbeitenden Werkstückkontur 7 ausgerichtet, angedeutet durch die gestrichelte Linie des jeweils senkrecht auf der Werkstückkontur 7 stehenden Pfeils. Die Werkzeugachse 3 weist in der gezeigten Darstellung in die Bildebene hinein und wird jeweils durch einen kleinen Kreis im Zentrum des Werkzeugkoordinatensystems dargestellt. Das Vektor-Kreuzprodukt 6 wird durch die durchgezogenen Linie des jeweils zweiten Pfeils jedes Werkzeugkoordinatensystems symbolisiert.

Da das rotationssymmetrische Werkzeug 2 gemäß dem Stand der Technik fortwährend an die jeweilige Lage der Flächenormalen n_{F} angepasst werden muss, resultiert daraus die Notwendigkeit, die Werkzeugachse 4 des rotationssymmetrischen Werkzeugs 2 ständig neu auszurichten und somit durch die Bewegung zusätzliche Kräfte, insbesondere Beschleunigungs- und Fliehkräfte, auf das Werkzeug 2 ausüben, welche sich negativ auf die Positionierungsgenauigkeit und somit das Bearbeitungsergebnis auswirken können.

Die **Figur 2B** zeigt einen Schnitt durch das gleiche Werkstück 1, die entsprechende zu bearbeitende Werkstückkontur 7, sowie die Lage eines Werkzeugkoordinatensystems an verschiedenen Stellen der Werkstückkontur 7, wobei die Werkzeugbahn nun gemäß dem erfindungsgemäßen Verfahren optimiert worden ist. Die einzelnen Achsen 3, 4 und 6 des Werkzeugkoordinatensystems entsprechen ebenfalls denen aus der Figur 2A.

Im Unterschied zur Figur 2A ist die Werkzeugbahn derart optimiert worden, dass die Rotation eines Vektorfeldes, welches sich aus den drei Vektoren 3, 4 und 6 bilden lässt, gerade der Nullvektor 0 ergibt. Mit anderen Worten, die einzelnen Achsen des Werkzeugkoordinatensystems weisen jederzeit in dieselbe Richtung, nur die Lage des Ursprungs ändert sich laufend. Durch die fehlende Rotation werden auch keine zusätzlichen Kräfte auf das Werkzeug 2 ausgeübt, wodurch das Bearbeitungsergebnis positiv beeinflusst wird.

Die **Figur 3A** zeigt einen Schnitt durch ein quadratisches Werkstück 1, die zu bearbeitende Werkstückkontur 7, sowie die Lage des Vektors 4 an verschiedenen Stellen der Werkstückkontur 7 bei einer Bahnplanung gemäß dem Stand der Technik. Die Lage des Vektors 4 (gestrichelte Linie) steht dabei jederzeit senkrecht auf der zu bearbeitenden Werkstückoberfläche bzw. Werkzeugkontur 7. An den scharfen Werkstückecken des beispielhaft dargestellten Werkstücks 1 muss das Werkzeug 2 in sehr kurzer Zeit seine Vorschubrichtung 8 um 90 Grad ändern, angedeutet durch die jeweils gebogenen, durchgezogen gezeichneten Pfeile. Durch diese sehr schnelle und abrupte Bewegung können wiederum unerwünscht hohe Kräfte auf das Werkzeug 2 ausgeübt werden, welche zu einer negativen Beeinflussung des Bearbeitungsergebnisses führen können.

Im Unterschied zu Figur 3A zeigt die **Figur 3B** die Lage des Vektors 4 bei einer Bahnplanung, welche gemäß dem erfindungsgemäßen Verfahren optimiert wurde. Im hier dargestellten Fall besteht das Optimierungsziel darin, die Winkelbeschleunigung des nicht dargestellten Werkzeugs 2 zu minimieren oder zumindest nicht über einen definierten Wert ansteigen zu lassen. Wie aus der Figur 3B ersichtlich, neigt sich der Vektor 4 bei zunehmender Annäherung an die in (mittels durchgezogener Pfeile angedeutete) Vorschubrichtung 8 nächstliegende Ecke des Werkstückes immer stärker nach vorne, so dass seine Bewegung beim Erreichen und Überstreichen der Werkstückecke weit weniger abrupt ausfällt, wodurch auch die damit verbundenen, auf das Werkzeug 2 wirkenden Kräfte deutlich geringer ausfallen, was sich schließlich auch positiv auf das Bearbeitungsergebnis auswirkt.

## Patentansprüche

1. Verfahren zum optimierten endkonturnahen Fräsen mittels eines rotationssymmetrischen Werkzeugs (1), **dadurch gekennzeichnet, dass** ein numerisches Optimierungsverfahren zur automatischen Steuerung der kinematischen Bewegungsabläufe vorgesehen ist, wobei eine zusätzliche Rotation um eine zu der Werkzeugachse (2) parallele Achse hinsichtlich kinematischer und/oder kinetischer und/oder werkstückspezifischer Fertigungskriterien optimiert wird.

2. Verfahren nach Anspruch 1, bei welchem das Fräsen robotergestützt durchgeführt wird.

3. Verfahren nach einem der vorangegangenen Ansprüche, bei welchem das Fräsen mittels einer CNC-Werkzeugmaschine durchgeführt wird.

4. Verfahren nach einem der vorherigen Ansprüche, bei welchem als Zielgröße zur Optimierung der Weg und/oder die Geschwindigkeit und/oder die Beschleunigung und/oder daraus abgeleitete kinematische Kenngrößen verwendet werden.

5. Verfahren nach einem der vorangegangenen Ansprüche, bei welchem das numerische Verfahren eine rekursive Min-Max-Spielstrategie ist.

6. Verfahren nach einem der vorangegangenen Ansprüche, bei welchem das numerische Verfahren eine Variante der Methode des steilsten Gradienten ist.

7. Verfahren nach einem der vorangegangenen Ansprüche, bei welchem das numerische Verfahren des "simulated-annealing" eingesetzt wird.

8. Verfahren nach einem der vorangegangenen Ansprüche, bei welchem als numerisches Verfahren ein genetischer Algorithmus eingesetzt wird.

9. Verfahren nach einem der vorangegangenen Ansprüche, bei welchem als numerisches Verfahren die Evolutionsstrategie eingesetzt wird.

10. Verfahren nach einem der vorangegangenen Ansprüche, bei welchem als numerisches Verfahren eine Variante des "operation research" eingesetzt wird.

11. Verfahren nach Anspruch 10, bei welchem linear überbestimmte Gleichungssysteme zur Minimierung des Gausschen Fehlerquadrates eingesetzt werden.

12. Verfahren nach einem der vorangegangenen Ansprüche, bei welchem als numerisches Verfahren ein Monte-Carlo-Verfahren eingesetzt wird.

13. Verfahren nach einem der vorherigen Ansprüche, bei welchem Fasen (5) und/oder Entgratungen (5) von Werkstückkanten gefräst werden.

14. Verfahren nach Anspruch 13, bei welchem die Fasen (5) von Turbinenschaufeln gefräst und/oder entgratet werden.

15. Computerprogramm zur Ausführung auf einem Rechner, welcher die Durchführung des erfindungsgemäßen Verfahrens gemäß einem der Ansprüche 1 - 14 erlaubt.

16. Datenträger, der ein Computerprogramm gemäß Anspruch 15 umfasst.
